# EUROPÄISCHE PATENTANMELDUNG

(11) **EP 2 730 885 A1**
(43) Veröffentlichungstag der Anmeldung: **14.05.2014**
(21) Anmeldenummer: 12192392.4
(22) Anmeldetag: 13.11.2012
(51) Int. Cl.: G01C 9/28, G01C 25/00

(54) **Messgerät und Verfahren zur Bestimmung einer räumlichen Ausrichtung von Bohrungen in einem Werkstück**

(71) Anmelder: Siemens Aktiengesellschaft, 80333 München (DE)
(72) Erfinder: Jahnke, Ronny, 14612 Falkensee (DE); Sczepurek, Tristan, 13129 Berlin (DE)

(57) **Zusammenfassung**

Es werden ein Messgerät (1) und ein Verfahren zur Bestimmung einer räumlichen Ausrichtung von Bohrungen (8) in einem Werkstück (4) eingeführt. Gemäß einer ersten Erfindungsform besitzt das Messgerät (1) einen Messgerätekopf (2) mit einer Haltevorrichtung, die dazu ausgebildet ist, einen stabförmigen Prüfstift (3) aufzunehmen und lösbar mit dem Messgerätekopf (2) zu verbinden. Der Messgerätekopf (2) weist außerdem wenigstens einen mit der Haltevorrichtung verbundenen Neigungssensor auf, der ausgebildet ist, eine Neigung des Messgerätekopfes (2) zu bestimmen und ein die Neigung repräsentierendes Neigungssensorsignal auszugeben.

Gemäß einer zweiten Erfindungsform besitzt das Messgerät (1) einen stabförmigen Prüfstift (3) und wenigstens einen mit dem stabförmigen Prüfstift (3) verbundenen Neigungssensor, der ausgebildet ist, eine Neigung des Prüfstifts (3) zu bestimmen und ein die Neigung repräsentierendes Neigungssensorsignal auszugeben.

Die Erfindung betrifft außerdem ein Verfahren, bei dem das Messgerät (1) verwendet wird.

## Beschreibung

### Technisches Gebiet

Die Erfindung betrifft ein Messgerät und ein Verfahren zur Bestimmung einer räumlichen Ausrichtung von Bohrungen in einem Werkstück.

### Technischer Hintergrund

In eine Vielzahl von Werkstücken werden Bohrungen eingebracht, um eine bestimmte Funktionalität umzusetzen. So werden beispielsweise Kühlluftbohrungen im Blattbereich von Turbinenschaufeln von Gasturbinen angeordnet, um eine gewünschte Kühlwirkung zu erreichen. Neben den genauen Positionen der Bohrungen ist die Einhaltung enger Winkeltoleranzen bei der Ausrichtung der Bohrungen innerhalb des Werkstücks für eine optimale Funktionsfähigkeit des Werkstücks entscheidend. Die Einhaltung der für jede Bohrung festgelegten Raumwinkel ist daher im Zuge der Kontrolle der erzielten Qualität des Werkstücks und des verwendeten Fertigungsprozess zu überprüfen.

Aufgrund der kleinen Abmessungen der Bohrungen mit Durchmessern überwiegend unter einem Millimeter ist eine direkte Vermessung der Bohrungen zum Beispiel mittels taktiler oder optischer Verfahren wie durch Koordinatenmessmaschinen gegenwärtig nicht möglich. Daher benutzt man Hilfsmittel wie Messstifte, die in die Bohrung eingeführt werden und die räumliche Ausrichtung der Bohrung außerhalb des Werkstücks abbilden. Die Raumwinkel des Messstifts kann dann mittels optischer oder taktiler Messverfahren ermittelt werden. Dabei sind einfache Messverfahren wie mechanische Winkelmesser ungeeignet, weil üblicherweise keine geeigneten Auflageflächen für diese am Werkstück vorhanden sind und die Raumwinkel in einem 3D-Bezugssystem bestimmt werden müssen.

Die zur Verfügung stehenden Messverfahren sind aufwändig und für eine serienbegleitende Schnellprüfung ungeeignet. Die Erfindung macht es sich daher zur Aufgabe, ein Messgerät und ein Verfahren einzuführen, dass eine schnelle und einfache Bestimmung einer räumlichen Ausrichtung von Bohrungen in einem Werkstück ermöglicht.

### Zusammenfassung der Erfindung

Ein erster Erfindungsaspekt führt ein Messgerät ein. Gemäß einer ersten Erfindungsform besitzt das Messgerät einen Messgerätekopf, der eine Haltevorrichtung aufweist. Die Haltevorrichtung ist dazu ausgebildet, einen stabförmigen Prüfstift aufzunehmen und lösbar mit dem Messgerätekopf zu verbinden. Der Messgerätekopf weist außerdem wenigstens einen mit der Haltevorrichtung verbundenen Neigungssensor auf, der ausgebildet ist, eine Neigung des Messgerätekopfes zu bestimmen und ein die Neigung repräsentierendes Neigungssensorsignal auszugeben. Die Haltevorrichtung ist vorzugsweise dazu ausgebildet, den Prüfstift lösbar und rotationsfest mit dem Messgerätekopf zu verbinden.

Gemäß einer zweiten Erfindungsform besitzt das Messgerät einen stabförmigen Prüfstift und wenigstens einen mit dem stabförmigen Prüfstift verbundenen Neigungssensor, der ausgebildet ist, eine Neigung des Prüfstifts zu bestimmen und ein die Neigung repräsentierendes Neigungssensorsignal auszugeben.

Das Messgerät erlaubt eine einfache und schnelle Bestimmung der räumlichen Ausrichtung einer Bohrung in einem Werkstück, indem der stabförmige Prüfstift in die Bohrung eingeführt und dann die Neigung des Messgerätekopfes beziehungsweise der Haltevorrichtung für den Prüfstift bestimmt werden. Neigungssensoren auf Basis der Gravitationskraft sind heute weit verbreitet und in miniaturisierter Form beispielsweise in vielen Mobiltelefonen vorhanden. Ebenso sind industrielle Neigungssensoren preiswert verfügbar. Die Messgeräte der Erfindung können daher preiswert aus in großen Stückzahlen hergestellten Komponenten aufgebaut werden. Eine Überprüfung der Einhaltung der Fertigungstoleranzen kann mit einem erfindungsgemäßen Messgerät schnell und einfach durchgeführt werden. Das Messgerät der ersten Erfindungsform besitzt dabei den Vorteil, für unterschiedliche Bohrungsdurchmesser und -querschnitte jeweils entsprechende Prüfstifte aufnehmen zu können. Allerdings ist es gegenüber der zweiten Ausführungsform komplexer im Aufbau und es sollte sichergestellt werden, dass die Haltevorrichtung den Prüfstift möglichst ohne Spiel, also starr, hält, da die erzielbare Messgenauigkeit unter anderem hiervon abhängt.

Bei dem erfindungsgemäßen Messgerät ist der Neigungssensor vorzugsweise dazu ausgebildet, die Neigung gegenüber wenigstens zwei zueinander senkrechten Raumachsen zu bestimmen. Wenn der Neigungssensor die Neigung gegenüber mehreren Raumachsen bestimmen kann, reduziert sich entsprechend der Aufwand für eine Ausrichtung des Messgerätes vor der durchzuführenden Messung.

Besonders bevorzugt liegen die zwei Raumachsen in einer Ebene, zu der eine Längsachse des stabförmigen Prüfstifts senkrecht ist. Dies bietet den Vorteil, dass bei einer Messung mit dem Messgerät eine Rotation des Messgerätes um die Längsachse des in die Bohrung eingeführten Prüfstifts erkannt und die Messwerte automatisch so korrigiert werden können, dass die Rotation ausgeglichen wird.

Das Messgerät kann auch mit einem Richtungssensor ausgestattet sein, der ausgebildet ist, eine Rotationsrichtung des Messgerätes um die Haltevorrichtung zu bestimmen und ein die Rotationsrichtung repräsentierendes Richtungssensorsignal auszugeben. Dies ist dort vorteilhaft, wo die Bestimmung der Rotationsrichtung des Messgerätes um den Prüfstift wünschenswert ist. Als Richtungssensoren können beispielsweise Gyro- oder Magnetfeldsensoren (Kompass) zum Einsatz kommen, die ebenfalls miniaturisiert in großen Stückzahlen für Mobiltelefone und dergleichen preisgünstig produziert werden.

Das Messgerät kann mit einer Anzeige für das Neigungssensorsignal ausgestattet sein. Alternativ oder zusätzlich kann das Messgerät auch über eine drahtlose Datenübertragungseinheit verfügen, welche ausgebildet ist, das Neigungssensorsignal drahtlos zu senden. Das drahtlos gesendete Neigungssensorsignal kann von einer mit einem Empfänger ausgestatteten Datenverarbeitungseinheit empfangen und verarbeitet werden, ohne dass das Messpersonal die Verarbeitung und Auswertung des Neigungssensorsignals eigens veranlassen muss.

Ein zweiter Erfindungsaspekt betrifft ein Messgeräteset, das ein Messgerät gemäß der ersten Erfindungsform des ersten Erfindungsaspekts und wenigstens einen stabförmigen Prüfstift umfasst. Bei einem Messgeräteset mit mehreren solchen Prüfstiften weisen die Prüfstifte vorzugsweise jeder einen jeweiligen Durchmesser und/oder eine jeweilige Querschnittsform auf, die für verschiedenartig ausgeführte Bohrungen des Werkstücks geeignet sind.

Ein dritter Aspekt der Erfindung betrifft die Verwendung eines Messgerätes gemäß dem ersten Erfindungsaspekt oder eines Messgerätesets gemäße dem zweiten Erfindungsaspekt zur Messung einer Ausrichtung einer Bohrung in einem Werkstück im Rahmen eines Messverfahrens, im Zuge dessen Durchführung der stabförmige Prüfstift in die Bohrung eingeführt und die Ausrichtung der Bohrung anhand des Neigungssensorsignals gemessen werden kann.

Das Verfahren kann über einen zusätzlichen Schritt des Kalibrierens des Messgerätes verfügen, bei dem der stabförmige Prüfstift in eine Kalibrierbohrung eingeführt und eine Ausrichtung der Kalibrierbohrung mit dem Messgerät gemessen wird. Dabei ist wenigstens eine Richtungskomponente der Ausrichtung der Kalibrierbohrung vorbekannt. Eine Abweichung der gemessenen Ausrichtung von der vorbekannten Ausrichtung wird dann für eine Kalibrierung des Messgerätes berücksichtigt. Die Kalibrierung steigert die Genauigkeit der Messergebnisse vorteilhaft.

Vorzugsweise wird für den Schritt des Kalibrierens ein Kalibrierkörper verwendet, in dem die Kalibrierbohrung angeordnet ist. Der Kalibrierkörper erlaubt eine besonders einfache, schnelle und zuverlässige Ausrichtung des Prüfstifts für die Kalibrierung.

Der Kalibrierkörper kann vor dem Schritt des Kalibrierens auf eine Referenzfläche mit einer bekannten räumlichen Ausrichtung aufgelegt werden, wodurch auch die Ausrichtung der Kalibrierbohrung in dem Kalibierkörper bekannt ist. Die Referenzfläche kann eine Fläche des Werkstücks oder eine Oberfläche eines Messtisches sein, auf dem das Werkstück aufliegt.

### Kurzbeschreibung der Abbildungen

Die Erfindung wird im Folgenden anhand von Abbildungen näher beschrieben. Dabei bezeichnen gleiche Bezugszeichen gleiche oder ähnliche Gegenstände. Es zeigen:
- Fig. 1: eine Messung der Neigung einer Bohrung in einem Werkstück mit einem erfindungsgemäßen Messgerät;
- Fig. 2: eine Kalibrierung des erfindungsgemäßen Messgerätes in einer ersten Verfahrensvariante; und
- Fig. 3: eine Kalibrierung des erfindungsgemäßen Messgerätes in einer zweiten Verfahrensvariante.

### Ausführliche Beschreibung der Abbildungen

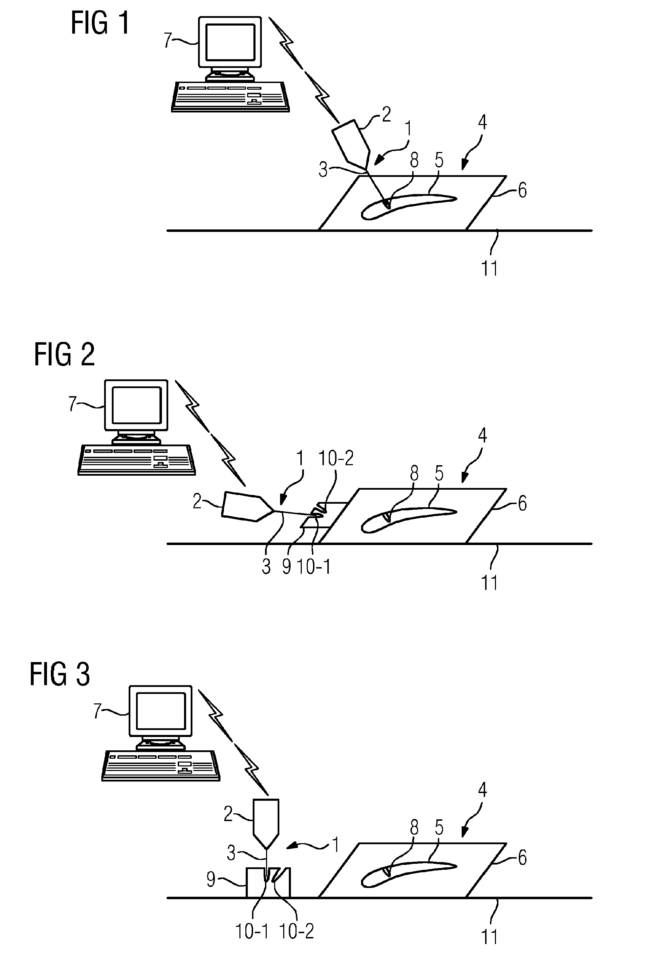

Fig. 1 zeigt eine Messung der Neigung einer Bohrung in einem Werkstück mit einem erfindungsgemäßen Messgerät. Ein erfindungsgemäßes Messgerät 1 umfasst einen Messgerätekopf 2 und einen stabförmigen Prüfstift 3, der fest oder lösbar mit dem Messgerätekopf 2 verbunden sein kann. Das Messgerät 1 enthält einen Neigungssensor, mit dem direkt oder mittelbar die Neigung des Prüfstifts 3 und damit einer Bohrung 8 in einem Werkstück 4, in die der Prüfstift 3 eingeführt wird, bestimmt werden kann. Durch die Messung kann die korrekte räumliche Ausrichtung der Bohrung 8 innerhalb des Werkstücks 4 überprüft werden. Das Werkstück 4 ist vorliegend eine Turbinenschaufel einer Gasturbine und umfasst ein Schaufelblatt 5, eine Schaufelplattform 6 und einen aus perspektivischen Gründen nicht dargestellten Schaufelfuß. Ein Neigungssensorsignal des Neigungssensors des Messgeräts 1 kann beispielsweise drahtlos an eine Messeinrichtung 7, beispielsweise an eine Datenverarbeitungseinheit, übertragen werden.

Fig. 2 zeigt eine Kalibrierung des erfindungsgemäßen Messgerätes 1 in einer ersten Verfahrensvariante. Hierbei wird der Prüfstift des Messgerätes 1 in eine Kalibrierbohrung 10-1 oder 10-2 eines Kalibrierkörpers 9 eingeführt und die räumliche Ausrichtung der Kalibrierbohrung 10-1 und/oder 10-2 gemessen. Der Kalibrierkörper 9 ist dabei auf eine geeignete Fläche 9 des Werkstücks 4, hier der Schaufelplattform 6, aufgelegt, wodurch die räumliche Ausrichtung der Kalibrierbohrungen 10-1, 10-2 in einen Bezug zu der zu messenden Ausrichtung der Bohrung 8 des Werkstücks 4 gebracht werden. Die Messung der für sich bekannten Ausrichtungen der Kalibrierbohrungen kann dann verwendet werden, um einen Messfehler bei der Vermessung der Bohrung 8 auszugleichen. Die Kalibrierung kann vor oder nach der Vermessung der Bohrung 8 durchgeführt werden.

Fig. 3 zeigt eine Kalibrierung des erfindungsgemäßen Messgerätes in einer zweiten Verfahrensvariante. Die Kalibrierung der zweiten Verfahrensvariante unterscheidet sich von der der ersten dadurch, dass der Kalibrierkörper 9 und das Werkstück 4 auf einer Referenzfläche, beispielsweise einem horizontal ausgerichteten Messtisch 11 aufliegen, wodurch ebenfalls der gewünschte Bezug zwischen den Ausrichtungen der Kalibrierbohrungen 10-1 und 10-2 einerseits und der Bohrung 8 des Werkstücks andererseits hergestellt wird.

Der in beiden Verfahrensvarianten verwendete Kalibrierkörper 9 besitzt vorzugsweise bekannte Dimensionen. Weist er mehrere Kalibrierbohrungen 10-1, 10-2 auf, deren Ausrichtungen jeweils oder wenigstens relativ zueinander bekannt sind, kann die Kalibrierung entsprechend genauer vorgenommen werden.

Die vorliegende Erfindung wurde unter Bezugnahme auf die Figuren anhand konkreter Ausführungsbeispiele beschrieben. Abwandlungen von diesen Ausführungsbeispielen sind jedoch möglich, ohne den Schutzbereich der Ansprüche zu verlassen.

## Patentansprüche

1. Ein Messgerät (1) mit einem Messgerätekopf (2), der eine Haltevorrichtung aufweist, die ausgebildet ist, einen stabförmigen Prüfstift (3) aufzunehmen und lösbar, vorzugsweise lösbar und rotationsfest, mit dem Messgerätekopf (2) zu verbinden, und wenigstens einem mit der Haltevorrichtung verbundenen Neigungssensor, der ausgebildet ist, eine Neigung des Messgerätekopfes (2) zu bestimmen und ein die Neigung repräsentierendes Neigungssensorsignal auszugeben.

2. Ein Messgerät (1) mit einem stabförmigen Prüfstift (3) und wenigstens einem mit dem stabförmigen Prüfstift (3) verbundenen Neigungssensor, der ausgebildet ist, eine Neigung des Prüfstifts (3) zu bestimmen und ein die Neigung repräsentierendes Neigungssensorsignal auszugeben.

3. Das Messgerät (1) von einem der beiden vorhergehenden Ansprüche,
bei dem der Neigungssensor dazu ausgebildet ist, die Neigung gegenüber wenigstens zwei zueinander senkrechten Raumachsen zu bestimmen.

4. Das Messgerät (1) des vorhergehenden Anspruchs,
bei dem die zwei Raumachsen in einer Ebene liegen, zu der eine Längsachse des stabförmigen Prüfstifts (3) senkrecht ist.

5. Das Messgerät (1) von einem der vorhergehenden Ansprüche,
mit einem Richtungssensor, der ausgebildet ist, eine Rotationsrichtung des Messgerätes um die Haltevorrichtung zu bestimmen und ein die Rotationsrichtung repräsentierendes Richtungssensorsignal auszugeben.

6. Das Messgerät (1) von einem der vorhergehenden Ansprüche,
mit einer Anzeige für das Neigungssensorsignal.

7. Das Messgerät (1) von einem der vorhergehenden Ansprüche,
mit einer drahtlosen Datenübertragungseinheit, welche ausgebildet ist, das Neigungssensorsignal drahtlos zu senden.

8. Ein Messgeräteset umfassend ein Messgerät (1) gemäß Anspruch 1 und wenigstens einen stabförmigen Prüfstift (3).

9. Verwendung eines Messgerätes (1) beziehungsweise eines Messgerätesets gemäß einem der vorhergehenden Ansprüche zur Messung einer Ausrichtung einer Bohrung (8) in einem Werkstück (4).

10. Das Verfahren des vorhergehenden Anspruchs,
bei dem der stabförmige Prüfstift (3) in die Bohrung (8) eingeführt und die Ausrichtung der Bohrung (8) anhand des Neigungssensorsignals gemessen wird.

11. Das Verfahren von einem der beiden vorhergehenden Ansprüche,
mit einem zusätzlichen Schritt des Kalibrierens des Messgerätes (1), bei dem der stabförmige Prüfstift (3) in eine Kalibrierbohrung (10-1, 10-2) eingeführt und eine Ausrichtung der Kalibrierbohrung (10-1, 10-2) mit dem Messgerät (1) gemessen wird, wobei wenigstens eine Richtungskomponente der Ausrichtung der Kalibrierbohrung (10-1, 10-2) vorbekannt ist und eine Abweichung der gemessenen Ausrichtung von der vorbekannten Ausrichtung für eine Kalibrierung des Messgerätes (1) berücksichtigt wird.

12. Das Verfahren des vorhergehenden Anspruchs,
bei dem ein Kalibrierkörper (9) verwendet wird, in dem die Kalibrierbohrung (10-1, 10-2) angeordnet ist.

13. Das Verfahren des vorhergehenden Anspruchs,
bei dem der Kalibrierkörper (9) vor dem Schritt des Kalibrierens auf eine Referenzfläche mit einer bekannten räumlichen Ausrichtung aufgelegt wird.

14. Das Verfahren des vorhergehenden Anspruchs,
bei dem die Referenzfläche eine Fläche des Werkstücks (4) ist.

15. Das Verfahren von Anspruch 13,
bei dem die Referenzfläche eine Oberfläche eines Messtisches (11) ist und das Werkstück (4) auf dem Messtisch (11) aufliegt.
